# DEMANDE DE BREVET EUROPEEN

(11) **EP 3 846 269 A1**
(43) Date de publication de la demande: **07.07.2021**
(21) Numéro de dépôt: 20217136.9
(22) Date de dépôt: 23.12.2020
(51) Int. Cl.: H01M 10/052, H01M 10/42, H01M 10/615, H01M 10/6554, H01M 10/657, H01M 50/116, H01M 50/124, H01M 50/545

(54) **DISPOSITIF DE DÉCLENCHEMENT D EMBALLEMENT THERMIQUE D'UN ACCUMULATEUR ÉLECTROCHIMIQUE, NOTAMMENT D'UN ACCUMULATEUR MÉTAL-ION, PROCÉDÉ ASSOCIÉ**

(30) Priorité: 03.01.2020 FR 2000020
(71) Demandeur: Commissariat à l'Energie Atomique et aux Energies Alternatives, 75015 Paris (FR)
(72) Inventeur: VINCENT, Rémi, 38054 GRENOBLE (FR); HUBERT, Maxime, 38054 GRENOBLE (FR)
(74) Mandataire: Nony

(57) **Abrégé**

L'invention concerne un dispositif (10) de déclenchement d'emballement thermique d'au moins un accumulateur électrochimique (A, A1, A2, ...) comprenant, un emballage souple (6) dont au moins une couche est métallique ou un boitier métallique (6), agencé pour contenir au moins une cellule électrochimique tout en étant traversé par une partie des collecteurs de courant formant les bornes de sortie (4, 5) de l'accumulateur, le dispositif comprenant :
- deux éléments (11, 12) de passage de courant électrique chacun en contact électrique avec l'extérieur respectivement d'une partie de la couche métallique de l'emballage souple ou du boitier métallique,
- une alimentation électrique indépendante de l'accumulateur, adaptée pour faire circuler un courant, dit courant de chauffe, entre les deux éléments de sorte à chauffer par effet Joule l'emballage souple ou le boitier de l'accumulateur.

## Description

### Domaine technique

La présente invention concerne le domaine des accumulateurs électrochimiques, et plus particulièrement des accumulateurs métal-ion.

Plus particulièrement, l'invention a trait à l'évaluation de la sécurité des batteries. L'invention vise principalement à contraindre un accumulateur métal-ion à partir en emballement thermique afin d'étudier les dispositifs de sécurité ou bien les risques de propagation au sein d'un pack batterie.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

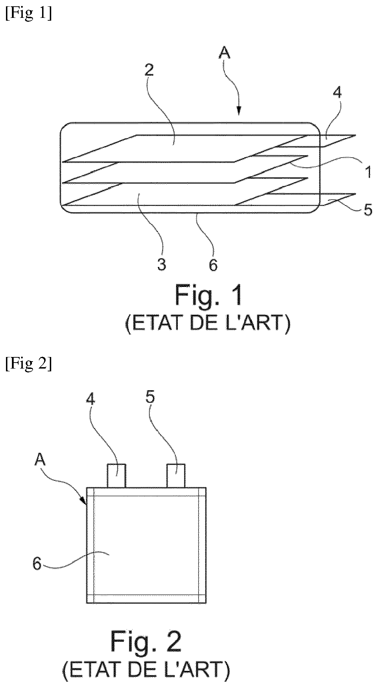

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous forme gel ou liquide, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO4, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

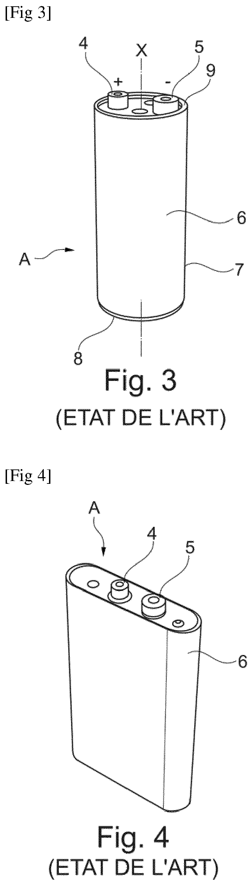

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

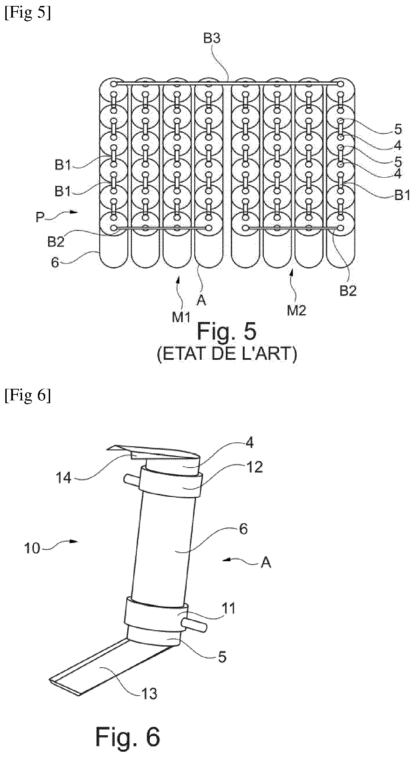

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six d'accumulateurs Li-ion en série.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou en cas de défaut au niveau d'une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»). Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Au niveau d'une cellule (accumulateur), les différents dispositifs internes de protection connus sont:
- un dispositif à coefficient de température positif (PTC acronyme anglo-saxon pour « Polymeric positive Temperature Coefficient ») : actuellement, un grand nombre d'accumulateurs cylindriques déjà commercialisés en sont munis. Un tel dispositif se présente sous la forme d'un anneau en polymère (polyéthylène) laminé avec un métal. En cas de surcharge, ce polymère chauffe, change de phase, devient plus résistif et limite ainsi le passage du courant ;
- un dispositif d'interruption du courant (CID pour « current interruption device ») : il interrompt le courant si la pression du gaz dans la cellule dépasse les limites spécifiées ;
- un dispositif coupe circuit (en anglais « shutdown ») qui empêche la génération de courants élevés ;
- un évent constitué d'une soupape ou d'un disque de rupture, qui s'ouvre lorsque la pression interne augmente brutalement, et dépasse une pression critique déterminée, afin d'éviter l'explosion de la cellule ;
- un fusible thermique, actuellement mis en œuvre dans les accumulateurs de grande capacité, qui coupe le courant dès lors que la température dans l'accumulateur est trop élevée.

Par ailleurs, les fabricants de batterie ont pour objectif d'augmenter constamment l'énergie de leurs batteries afin d'en améliorer les performances. Ainsi, l'utilisation de matériaux à haute capacité énergétique mais avec un comportement fortement exothermique en cas d'emballement thermique d'un accumulateur est de plus en plus courante : [1].

Il est donc important d'étudier les phénomènes conduisant à l'emballement thermique des accumulateurs ainsi que les risques de propagation de cet emballement à d'autres accumulateurs dans le cas d'un module ou d'un pack contenant plusieurs accumulateurs.

De plus, lorsqu'on étudie des dispositifs internes aux accumulateurs, de sécurité et de la propagation de l'emballement thermique, il est nécessaire de développer une solution rapide et reproductible pour déclencher un emballement thermique.

A ce jour, pour contraindre un accumulateur lithium-ion à un emballement thermique, plusieurs solutions existent et consistent en substance soit à réaliser une surcharge électrique, soit à mettre en œuvre un court-circuit externe, soit à faire un poinçonnement ou une surchauffe externe de l'accumulateur.

Un dispositif CID protège très bien l'accumulateur de la surcharge et du court-circuit externe.

Dans le cas d'un poinçonnement qui a lieu par pénétration d'un clou, le problème est la fuite des gaz par le trou créé par le clou. Ce dégazage n'est pas représentatif de la montée en pression et de l'éjection des gaz par les évents lors d'un emballement thermique réel. Le dispositif de poinçonnement est de plus difficile à mettre en œuvre sur une cellule située au cœur d'un pack.

Enfin, le problème de la surchauffe d'un accumulateur Lithium-ion avec un système de type cartouche chauffante est le temps que cela prend pour arriver à l'emballement thermique ainsi que la quantité d'énergie nécessaire. Cela peut notamment affecter de manière non-négligeable des accumulateurs voisins, c'est-à-dire adjacents au sein d'un module ou d'un pack-batterie. Par exemple, avec une cartouche chauffante dégageant une puissance de 300W, il faut environ 30 minutes pour initier un emballement thermique, soit une énergie consommée de 150Wh. De plus, dans le cas d'un test de propagation au sein d'un module, il est nécessaire d'adapter la structure de ce dernier, afin de pouvoir introduire la cartouche chauffante.

Il existe donc un besoin pour améliorer les solutions de déclenchement contraint d'un emballement thermique d'un accumulateur électrochimique, notamment d'un accumulateur métal-ion, afin de pallier les inconvénients précités.

Le but de l'invention est de répondre au moins en partie à ce besoin.

### Exposé de l'invention

Pour ce faire, l'invention concerne, sous l'un de ses aspects, un dispositif de déclenchement d'emballement thermique d'au moins un accumulateur électrochimique comprenant, un emballage souple dont au moins une couche est métallique ou un boitier métallique, agencé pour contenir au moins une cellule électrochimique tout en étant traversé par une partie des collecteurs de courant formant les bornes de sortie de l'accumulateur, le dispositif comprenant :
- deux éléments de passage de courant électrique chacun en contact électrique avec l'extérieur respectivement d'une partie de la couche métallique de l'emballage souple ou du boitier métallique,
- une alimentation électrique indépendante de l'accumulateur, adaptée pour faire circuler un courant, dit courant de chauffe, entre les deux éléments de sorte à chauffer par effet Joule l'emballage souple ou le boitier de l'accumulateur.

En ce qui concerne le phénomène d'emballement thermique, on se reportera à la publication [2] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Les deux éléments de passage du courant sont avantageusement des bagues conductrices ou des clinquants.

Selon une variante de réalisation avantageuse, les deux éléments de passage du courant sont des agencés autour de l'enveloppe latérale du boitier métallique ou autour de la couche métallique de l'emballage souple de l'accumulateur.

Selon cette variante, de préférence, un des deux éléments de passage du courant est agencé au plus près d'une des extrémités longitudinales de l'accumulateur tandis que l'autre des deux éléments est agencé au plus près de l'autre des extrémités longitudinales. Cet agencement permet maximiser la surface de l'emballage (souple ou boitier) de l'accumulateur qui va être parcourue par le courant de chauffe. Dans un cas particulier, il est même possible d'utiliser un clinquant à la borne négative de l'accumulateur comme élément négatif de passage du courant du dispositif selon l'invention.

Selon une application avantageuse, l'emballage souple est constitué d'un empilement de trois couches dont la couche du milieu est celle métallique dénudée en partie et en contact avec les deux éléments, tandis que les couches interne et externe sont en polymère.

Avantageusement encore, l'empilement est un tri-couche polyamide/aluminium/polypropylène. Il peut s'agir de l'emballage souple tri-couche commercialisé par la société MTI corporation : https://www.mtixtl.com/AluminumLaminatedFilm400mmWx7.5mL-EQ-alf-400-7.5M.aspx.

Selon un mode de réalisation avantageux, le dispositif est celui d'un déclenchement d'emballement thermique d'au moins un accumulateur parmi une pluralité d'accumulateurs, les deux éléments de passage de courant électrique étant sous la forme de clinquants chacun en contact électrique avec l'extérieur respectivement d'une partie de la couche métallique de l'emballage souple ou du boitier métallique de chacun des accumulateurs.

Chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO4, LiCoO₂, LiNi_{0.33}Mn_{0.33}CO_{0.33}O₂.

Selon une variante avantageuse, le dispositif de déclenchement est configuré de sorte que l'emballage souple ou le boitier métallique soit connecté électriquement à l'une des bornes de sortie de l'accumulateur, ladite borne de sortie de l'accumulateur étant agencée sur l'emballage souple ou sur le boitier métallique en-dehors d'une zone de passage d'un courant électrique entre les deux éléments de passage de courant électrique.

Autrement dit, on veille à ce que la borne de sortie connectée électriquement à l'emballage ou au boitier soit agencée hors du champ du courant électrique de chauffage qui circule entre les deux éléments de passage de courant électrique. Cela n'empêche pas que cette borne de sortie soit connectée électriquement à l'un des éléments de passage de courant électrique, par exemple dans le cas où la borne de sortie et l'élément de passage de courant électrique sont connectés au même clinquant.

Grâce à cette caractéristique, on limite les perturbations de potentiel sur la cellule électrochimique susceptibles d'être générées par le passage d'un fort courant de chauffage à travers l'emballage ou le boitier.

L'invention concerne également un procédé de déclenchement d'emballement thermique d'au moins un accumulateur mis en œuvre par un dispositif décrit précédemment, comprenant l'étape suivante :
a/ application d'un courant circulant entre les deux éléments de passage de courant de sorte à chauffer par effet Joule l'emballage souple ou le boitier de l'accumulateur.

Selon un mode de réalisation avantageux, le procédé comprend une étape b/ d'application d'un courant de charge ou de décharge qui traverse l'accumulateur entre ses bornes de sortie; l'étape a/ étant réalisée pendant l'étape b/.

L'étape a/ peut être réalisée simultanément au début de l'étape b/ ou de manière décalée dans le temps. Le cas échéant, on peut même s'affranchir de l'étape b/, ce qui correspond à une situation où l'on souhaite emballer thermiquement l'accumulateur en dehors d toute condition de charge ou décharge. Cette situation peut par exemple correspondre à une simulation d'un cas de chauffe externe à l'accumulateur.

De préférence, le potentiel du boitier métallique ou de la couche métallique de l'emballage souple, lors de l'étape b/, est égal à 0V.

Selon une caractéristique avantageuse, le courant appliqué selon l'étape a/ est de l'ordre de 200A pour un accumulateur de format standard 18650.

Ainsi, l'invention consiste essentiellement en un dispositif de chauffe par effet Joule de l'accumulateur qui va délivrer un courant de valeur élevée dans le boitier métallique ou dans la couche métallique de l'emballage souple qui fonctionne ainsi comme une résistance électrique chauffante.

Le boitier métallique, typiquement en acier inoxydable ou en aluminium, ou une couche métallique, typiquement en aluminium permet une conduction de l'électricité tout en ayant une résistivité qui n'est pas négligeable.

Ainsi, l'invention permet en faisant passer un courant élevé dans l'emballage souple ou rigide d'un accumulateur, de le faire chauffer très rapidement, typiquement en un temps de moins de 5 minutes, sans générer trop d'échauffement des accumulateurs environnants au sein d'un module.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en perspective éclatée montrant les différents éléments d'un accumulateur lithium-ion.
[Fig 2] est une vue de face montrant un accumulateur lithium-ion avec son emballage souple selon l'état de l'art.
[Fig 3] est une vue en perspective d'un accumulateur lithium-ion selon l'état de l'art avec son emballage rigide constitué d'un boitier de forme cylindrique.
[Fig 4] est une vue en en perspective d'un accumulateur lithium-ion selon l'état de l'art avec son emballage rigide constitué d'un boitier de forme prismatique.
[Fig 5] est une vue en perspective d'un assemblage au moyen de busbars d'accumulateurs lithium-ion selon l'état de l'art, formant un pack-batterie.
[Fig 6] est une reproduction photographique d'un dispositif de déclenchement d'emballement thermique d'un accumulateur Li-ion de format standard 18650, selon l'invention.
[Fig 7] est une autre reproduction photographique du dispositif selon la figure 6.
[Fig 8] est une vue de courbes montrant respectivement l'évolution de la température et de la tension lors d'un essai d'emballement thermique mis en œuvre avec un dispositif selon l'invention.
[Fig 9] est une vue schématique d'un dispositif selon l'invention mis en œuvre pour plusieurs accumulateurs adjacents.

### Description détaillée

Les figures 1 à 5 sont relatives à des exemples différents d'accumulateur Li-ion, d'emballage souple et boitier d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 9.

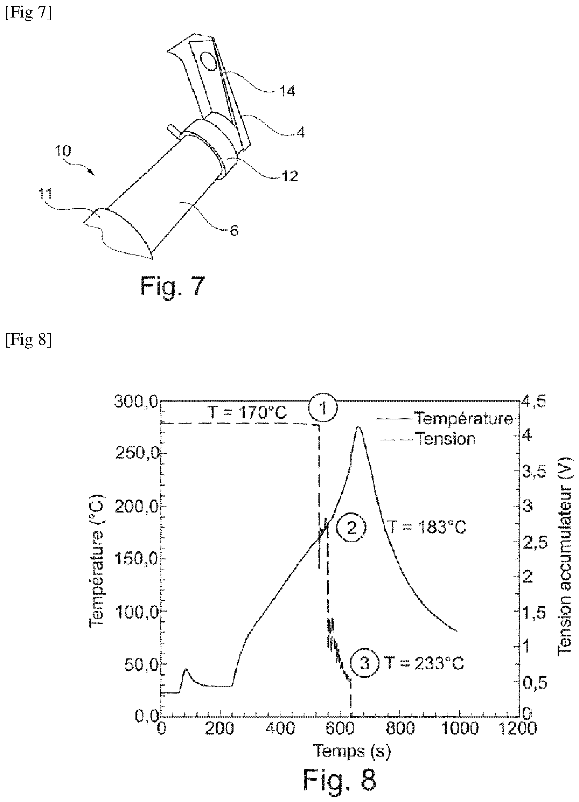

On a représenté en figures 6 et 7, un exemple de dispositif 10 de déclenchement d'emballement thermique d'un accumulateur Li-ion A, selon l'invention.

Dans les exemples illustrés, les accumulateurs A, A1-A4 illustrés sont à boitiers de format cylindrique, typiquement de format 18650 ou prismatique.

Le dispositif 10 comprend deux bagues 11, 12 conductrices de courant fixées par sertissage autour du godet 6 métallique, typiquement en acier inoxydable d'un accumulateur Li-ion A. Comme montré, de préférence, chacune des deux bagues 11, 12 est fixée au plus près de l'une des extrémités longitudinales, ici de l'une des bornes de sortie 4, 5 de l'accumulateur A. En particulier pour la fixation du côté de la borne de sortie négative 5, cela permet d'éviter les problèmes de polarisation de l'anode lors de l'essai abusif.

Les deux bagues 11, 12 sont reliées à une alimentation électrique non représentée qui permet de délivrer un courant de valeur élevée.

A chaque extrémité du godet 6, un film isolant électrique 13, 14, du type Kapton® encapsule la borne de sortie 4 ou 5 pour éviter tout court-circuit lors de l'application d'un courant au travers des bagues.

Les inventeurs ont procédé à des essais pour valider le fonctionnement du dispositif 10 selon l'invention.

Ces essais consistent à faire passer un courant élevé dans le godet 6 par le biais des bagues conductrices de sorte à faire chauffer l'accumulateur très rapidement, typiquement en un temps de moins de 5 minutes.

La figure 8 présente les courbes respectivement d'évolution de température et de tension de l'accumulateur au cours d'un essai d'emballement thermique mis en œuvre avec l'invention. Pour cet essai, un courant de 200A a été appliqué sur le godet 6 avec une tension aux bornes 4,5 de l'accumulateur égale à 0,7V.

Le courant de 200 A est appliqué à partir de t = 250 s. On remarque qu'à partir de ce moment, il faut moins de 5 minutes (t < 550 s) pour initier l'emballement thermique de l'accumulateur A et passer de 30°C à 170°C. Cela représente une énergie de 12Wh pour générer l'emballement thermique, soit plus de 10 fois moins que l'énergie nécessaire avec une cartouche chauffante selon l'état de l'art.

De plus, le montage du dispositif selon l'invention 10 présente l'avantage d'être plus simple à introduire dans un module de plusieurs accumulateurs adjacents.

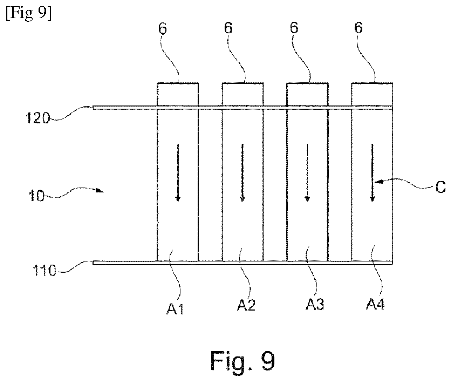

La figure 9 montre un mode d'agencement avantageux, selon lequel les bagues 11, 12 sont remplacées par des clinquants 110, 120 dont l'un 110 qui vient relier en bas les godets 6 d'un ensemble d'accumulateurs A1 à A4 et le courant de chauffe C passe alors de ce clinquant 110 jusqu'au clinquant 120 reliant les pôles négatifs 4 des accumulateurs A1 à A4.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans les exemples illustrés en figures 6 et 7, les éléments de passage du courant de chauffe de l'accumulateur sont constitués par des bagues conductrices fixées autour du boitier métallique, on peut envisager tout autre type d'élément, comme les clinquants montrés schématiquement en figure 9.

Bien que les exemples illustrés se rapportent à des accumulateurs à boitier, l'invention s'applique au déclenchement d'emballement thermique des accumulateurs à emballage souple comprenant au moins une couche métallique au contact de laquelle on vient mettre les deux éléments de passage du courant de chauffe. La couche métallique agit alors comme une résistance chauffante

### Liste des références citées :

[1] Xuning Feng, et al. « Thermal runaway mechanism of lithium ion battery for electric vehicles: A review» Energy Storage Materials, Volume 10, January 2018, Pages 246-267.
[2] Xuning Feng, et al. « Key Characteristics for Thermal Runaway of Li-ion Batteries » Energy Procedia, 158 (2019) 4684-4689.

## Revendications

1. Dispositif (10) de déclenchement d'emballement thermique d'au moins un accumulateur électrochimique (A, A1, A2, ...) comprenant, un emballage souple (6) dont au moins une couche est métallique ou un boitier métallique (6), agencé pour contenir au moins une cellule électrochimique tout en étant traversé par une partie des collecteurs de courant formant les bornes de sortie (4, 5) de l'accumulateur, le dispositif comprenant :
- deux éléments (11, 12) de passage de courant électrique chacun en contact électrique avec l'extérieur respectivement d'une partie de la couche métallique de l'emballage souple ou du boitier métallique,
- une alimentation électrique indépendante de l'accumulateur, adaptée pour faire circuler un courant, dit courant de chauffe, entre les deux éléments de sorte à chauffer par effet Joule l'emballage souple ou le boitier de l'accumulateur.

2. Dispositif (10) de déclenchement selon la revendication 1, les deux éléments de passage de courant étant des bagues conductrices ou des clinquants.

3. Dispositif (10) de déclenchement selon la revendication 1 ou 2, les deux éléments de passage de courant étant agencés autour de l'enveloppe latérale du boitier métallique ou autour de la couche métallique de l'emballage souple de l'accumulateur.

4. Dispositif (10) de déclenchement selon l'une des revendications précédentes, un des deux éléments étant agencé au plus près d'une des extrémités longitudinales de l'accumulateur tandis que l'autre des deux éléments est agencé au plus près de l'autre des extrémités longitudinales.

5. Dispositif (10) de déclenchement selon l'une des revendications précédentes, l'emballage souple étant constitué d'un empilement de trois couches dont la couche du milieu est celle métallique dénudée en partie et en contact avec les deux éléments, tandis que les couches interne et externe sont en polymère.

6. Dispositif (10) de déclenchement selon la revendication 5, l'empilement étant un tri-couche polyamide/aluminium/polypropylène.

7. Dispositif (10) de déclenchement selon l'une des revendications 2 à 6, d'au moins un accumulateur (A1, A2,...) parmi une pluralité d'accumulateurs, les deux éléments (11, 12) de passage de courant électrique étant sous la forme de clinquants chacun en contact électrique avec l'extérieur respectivement d'une partie de la couche métallique de l'emballage souple ou du boitier métallique de chacun des accumulateurs.

8. Dispositif (10) de déclenchement selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

9. Dispositif (10) de déclenchement selon l'une des revendications précédentes, configuré de sorte que l'emballage souple ou le boitier métallique soit connecté électriquement à l'une des bornes de sortie de l'accumulateur, ladite borne de sortie de l'accumulateur étant agencée sur l'emballage souple ou sur le boitier métallique en-dehors d'une zone de passage d'un courant électrique entre les deux éléments de passage de courant électrique.

10. Procédé de déclenchement d'emballement thermique d'au moins un accumulateur mis en œuvre par un dispositif selon l'une des revendications précédentes (10) comprenant les étapes suivantes :
a/ application d'un courant circulant entre les deux éléments de passage de courant de sorte à chauffer par effet Joule l'emballage souple ou le boitier de l'accumulateur.

11. Procédé de déclenchement selon la revendication 10, comprenant une étape b/ d'application d'un courant de charge ou de décharge qui traverse l'accumulateur entre ses bornes de sortie; l'étape a/ étant réalisée pendant l'étape b/.

12. Procédé de déclenchement selon la revendication 11, le potentiel du boitier métallique ou de la couche métallique de l'emballage souple, lors de l'étape b/, étant égal à 0V.

13. Procédé de déclenchement selon l'une des revendication 10 à 12, le courant appliqué selon l'étape a/ étant de l'ordre de 200A pour un accumulateur de format standard 18650.
